# EUROPÄISCHE PATENTSCHRIFT

(11) **EP 0 732 526 B1**
(45) Veröffentlichungstag und Bekanntmachung des Hinweises auf die Patenterteilung: **13.09.2000**
(21) Anmeldenummer: 96250057.5
(22) Anmeldetag: 08.03.1996
(51) Int. Cl.: F16G 11/02

(54) **Verfahren zur Herstellung einer Verbindung zwischen einem Rundlitzenseil und einem Seilendstück sowie Seilendstück zur Verwendung bei diesem Verfahren**
Process of manufacture of a connection between a stranded cable and an end fitting, and end fitting for use in the process
Procédé de fabrication d'une liaison entre un câble toronné et une pièce d'extrémité, et pièce d'extrémité pour l'utilisation dans le procédé

(30) Priorität: 16.03.1995 DE 19509547
(43) Veröffentlichungstag der Anmeldung: 18.09.1996
(73) Patentinhaber: Brugg Drahtseil AG, CH-5242 Birr (CH)
(72) Erfinder: Rattey, Gunter, 31832 Springe (DE)
(74) Vertreter: Steudtner, Werner, Dipl.-Ing.

(56) Entgegenhaltungen:
- EP-A- 0 619 443
- DE-U- 9 411 444
- FR-A- 1 197 581
- FR-A- 1 571 372
- GB-A- 405 784
- US-A- 1 643 150
- US-A- 2 901 822

## Beschreibung

Die Erfindung bezieht sich auf ein Verfahren zur Herstellung einer Verbindung zwischen einem Rundlitzenseil und einem einstückigen Seilendstück gemäß dem Oberbegriff des Anspruchs 1 sowie auf ein Seilendstück zur Verwendung bei diesem Verfahren gemäß dem Oberbegriff des Anspruchs 2.

Verfahren zur Herstellung einer Verbindung zwischen einem Rundlitzenseil und einem einstückigen Seilendstück, das eine dickwandige Anpresshülse besitzt und bei dem die Aussenabmasse der Anpresshülse quer zu ihrer Achsrichtung nach der Verbindungsherstellung wesentlich grösser als der Durchmesser des Drahtseils sind, waren schon seit langem z.B. aus der US-PS 1,643,150 bekannt. So liegt das Verhältnis von Hülsendurchmesser : Drahtseildurchmersser nach der Verbindungsherstellung beispielsweise bei der US-PS 1,643,150 bei ca. 1,5 und bei anderen bekannten Seilendstücken z.B. bei ca. 1,4 , 1,6 und 2,5. Die Verbindungsherstellung erfolgt bei diesen bekannten Verfahren zum Teil ebenfalls so, dass zunächst das Drahtseilende in die Anpresshülse eingesteckt wird und anschliessend durch Verformung, z.B. durch Hämmern, der Anpresshülse eine kraftschlüssige Verbindung zwischen dem Drahtseil und dem Seilendstück hergestellt wird, aber bei den bekannten Verfahren bereitet diese Verbindungsherstellung bzw. die daraus resultierende Verbindung Drahtseilende-Seilendstück keinerlei Probleme, weil bei einem nach der Verbindungsherstellung verbleibenden relativ grossen Verhältnis von Hülsendurchmesser : Drahtseildurchmesser und einer genügenden Länge der Anpresshülse die gesamte Seilbruchlast nicht nur über die kraftschlüssige Verbindung von dem Drahtseil auf das Seilendstück übertragen werden kann sondern von dort aus über das Seilendstück auch an die Befestigungsmittel für das Seilendstück weitergegeben werden kann, letzteres weil bei einem solchen grossen Durchmesserverhältnis die Belastbarkeit des tragenden Querschnitts der Anpresshülse um einiges über der Seilbruchlast liegt. Aber bei Verfahren der eingangs genannten Art, bei denen die Aussenabmasse der Anpresshülse quer zu ihrer Achsrichtung nach der Verbindungsherstellung etwa dem Durchmesser des Drahtseils entsprechen sollen, kann die Frage der Belastbarkeit des tragenden Querschnitts durchaus zu einem schwierigen Problem werden, denn einerseits muss der tragende Querschnitt der Anpresshülse nach der Verbindungsherstellung in dem Bereich, wo das in die Anpresshülse eingesteckte Drahtseil aufhört, mindestens ausreichen, um die über die kraftschlüssige Verbindung vom Drahtseilende auf die Anpresshülse übertragene Seillast über das Seilendstück an die Befestigungsmittel für das Seilendstück weitergeben zu können, und andererseits ist der tragende Querschnitt der Anpresshülse nach der Verbindungsherstellung in diesem Bereich durch die Bedingung nach oben begrenzt, dass die Aussenabmasse der Anpresshülse quer zu ihrer Achsrichtung nach der Verbindungsherstellung etwa dem Durchmesser des Drahtseils entsprechen sollen.

Bei einem Verfahren zur Herstellung des aus der EP-B-0619443 bekannten "Anschlussstückes an einem Drahtseilende" wurde dieses Problem eines ausreichenden tragenden Querschnittes der Anpresshülse nach der Verbindungsherstellung in dem Bereich, wo das in die Anpresshülse eingesteckte Drahtseilende aufhört, dadurch gelöst, dass als Seilendstück ein Stift mit einem etwa dem Drahtseildurchmesser entsprechenden Stiftdurchmesser verwendet wurde, der an einem Ende mit einem Gewinde zur Anbringung des Befestigungsmittels und am anderen Ende mit einer konzentrischen Bohrung von der vorgesehenen Länge der Anpresshülse und einem Bohrungsdurchmesser von z.B. 75-80% des Stiftdurchmessers versehen wurde und das Drahtseilende vor dem Einstecken in die durch die Bohrung gebildete Anpresshülse über eine etwa der Länge der gebildeten Anpresshülse entsprechende Länge so weit zusammengepresst wurde, dass es mit dem zusammengepressten Endstück gerade in die durch die Bohrung gebildete Anpresshülse passt, und die Anpresshülse dann nach dem Einstecken des Drahtseilendes zur Erhöhung der Haftreibung zwischen dem Drahtseilende und der dieses umschliessenden Anpresshülse von ihrer zuvor hohlzylindrischen Form z.B. in eine Sechskantform umgeformt wird und durch diese Verformung der Anpresshülse die kraftschlüssige Verbindung zwischen dem Drahtseil und dem Seilendstück hergestellt wird, wobei die Aussenabmasse der Anpresshülse quer zu ihrer Achsrichtung sich bei dieser Verformung in z.B. eine Sechskantform nicht wesentlich ändern und daher nach wie vor etwa dem Durchmesser des Drahtseils entsprechen. Das besagte Problem eines ausreichenden tragenden Querschnitts der Anpresshülse in dem erörterten kritischen Bereich ist bei diesem aus der EP-B-0619443 bekannten "Anschlussstück an einem Drahtseilende" in der Form gelöst, dass die bei ca. 60% der Seilmindestbruchlast liegende Grenze der Belastbarkeit der kraftschlüssigen Verbindung zwischen Drahtseilende und Anpresshülse vor einer Überbelastung des tragenden Querschnitts der Anpresshülse erreicht wird und bei einer weiteren Steigerung der Belastung über die vorgenannte Belastungsgrenze hinaus dann das Drahtseilende allmählich in differentiellen Schritten innerhalb der Anpresshülse verrutscht und bei jedem dieser differentiellen Schritte eine beginnende Überbelastung des tragenden Querschnitts der Anpresshülse und auch der kraftschlüssigen Verbindung zwischen Drahtseilende und Anpresshülse rückgängig gemacht wird.

Nach dem o.g. Verfahren hergestellte "Anschlussstücke an einem Drahtseilende" wie das aus der EP-B-0619443 bekannte Anschlussstück werden hauptsächlich in Bereichen eingesetzt, in denen Anschlussstück und Drahtseil durch Durchführungen mit nahezu dem Drahtseildurchmesser entsprechenden Durchmessern von Pfosten, Trägern, Rahmen usw. gezogen werden müssen, die beispielsweise Teile von Geländern, Brüstungen oder Umzäunungen sind.

Diese bekannten "Anschlussstücke an einem Drahtseilende" haben sich in der Praxis gut bewährt und sind im allgemeinen den gestellten Anforderungen wie z.B. der Verhinderung von durch Wind verursachten Schwingungen des Drahtseils und daraus resultierenden Lärmbelästigungen gerecht geworden, da Querschwingungen der Drahtseile in den Durchführungen wegen der nahezu gleichen Durchmesser von Durchführungen und Drahtseilen kaum mehr möglich sind. Auch Scherwirkungen auf die Drahtseile an den Öffnungsrändern der Durchführungen konnten mit Hilfe dieser bekannten Anschlussstücke mit nahezu gleichem Durchmesser wie dem der Drahtseile und der damit gegebenen Möglichkeit von Durchführungen mit ebenfalls nahezu gleichem Durchmesser wie dem der Drahtseile weitgehend vermieden werden.

In speziellen Fällen von höheren Belastungen von nach dem bekannten Verfahren hergestellten Verbindungen zwischen einem Rundlitzenseil und einem Seilendstück, wie sie beispielsweise bei schlagartigen Querbelastungen der Drahtseile eines Drahtseil-Zaunes durch Aufprall grösserer Massen auftreten, waren jedoch Verbindungen zwischen einem Rundlitzenseil und einem Seilendstück mit einer näher an die Seilmindestbruchlast herankommenden Belastbarkeit der kraftschlüssigen Verbindung zwischen dem Drahtseil und dem Seilendstück wünschenswert.

In diesem Sinne wurde bei dem aus der EP-A-0672844 bekannten Anschlussstück an einem Drahtseilende der Versuch unternommen, das Drahtseilende stumpf an das Anschlussstück anzuschweissen oder hart anzulöten. Anschlussstücke dieser Art haben zwar direkt an der Schweiss- bzw. Lötstelle recht hohe Festigkeiten, aber in unmittelbarer Nachbarschaft der Schweiss- bzw. Lötstelle wird das angeschweisste bzw. hart angelötete Drahtseil ausgeglüht, so dass sich unmittelbar neben der Schweiss- bzw. Lötstelle in bekannter Weise eine Schwachstelle von wesentlich geringerer Festigkeit als der der Schweiss- bzw. Lötstelle und insbesondere auch von wesentlich geringerer Festigkeit als der der nicht ausgeglühten Drähte des Drahtseils ergibt und die Anschlussstelle Anschlussstück-Drahtseil infolge dieser der Schweiss- bzw. Lötstelle benachbarten Schwachstelle im Drahtseil dann nur eine um einiges geringere Belastbarkeit als nach dem eingangs genannten Verfahren hergestellte bekannte Verbindungen zwischen einem Rundlitzenseil und einem Seilendstück wie z.B. das aus der EP-B-0619443 bekannte "Anschlussstück an einem Drahtseilende" aufweist. Zwar liesse sich dieses Ausglühen des Drahtseils in unmittelbarer Nachbarschaft der Verbindungsstelle zwischen den stumpf aneinander grenzenden Enden von Drahtseil und Anschlussstück theoretisch dadurch verhindern, dass man das Drahtseilende und das Anschlussstück nicht nicht durch Schweissen oder Hartlöten sondern durch eine Klebverbindung miteinander verbindet, aber praktische Erfahrungen mit Klebverbindungen anstelle von durch Schweissen oder Hartlöten hergestellten Verbindungen haben gezeigt, dass Klebverbindungen bei ähnlichen Festigkeiten wie denen von durch Schweissen oder Hartlöten hergestellten Verbindungen ausserordentlich spröde sind und daher Biegewechselbelastungen, wie sie an solchen Anschlussstellen Anschlussstück-Drahtseil auftreten, nicht standhalten und dass Klebverbindungen, die nicht so spröde sind und daher den auftretenden Biegewechselbelastungen standhalten würden, eine wesentlich geringere Festigkeit als diejenige von durch Schweissen oder Hartlöten hergestellten Verbindungen aufweisen. In der Praxis lässt sich daher mit dem aus der EP-A-0672844 bekannten Anschlussstück an einem Drahtseilende die besagte wünschenswerte Erhöhung der Belastbarkeit an der Anschlussstelle Anschlussstück-Drahtseil nicht erreichen, sondern es ist dort vielmehr eher mit einer geringeren Belastbarkeit gegenüber anderen bekannten, nach dem eingangs genannten Verfahren hergestellten Anschlussstücken an einem Drahtseilende zu rechnen. Nachteilig ist bei den aus aus der EP-A-0672844 bekannten Anschlussstücken an einem Drahtseilende ferner, dass das Schweissen bzw. Hartlöten des Drahtseilendes an das Anschlussstück in der Regel eine Nachbearbeitung zur Beseitigung von überstehenden Resten an der Schweiss- bzw. Lötstelle erfordert und dass Schweiss- bzw. Lötstellen in aller Regel nicht völlig gleichmässig ausgeführt werden können und in ästhetischer Hinsicht daher unansehnlich wirken.

In der FR-PS 1.197.581 ist ein gattungsgemäßes Verfahren zur Herstellung einer Verbindung zwischen einem Rundlitzenseil und einem Seilendstück vorgeschlagen worden, bei dem ebenfalls ein Ende des Drahtseils in eine dünnwandige Anpresshülse eingesteckt und anschliessend durch Verformung der Anpresshülse eine kraftschlüssige Verbindung zwischen dem Drahtseil und dem Seilendstück in einer Form hergestellt wird, dass die Aussenabmasse der Anpresshülse quer zu ihrer Achsrichtung nach der Verformung dem Durchmesser des Drahtseils entsprechen. Dieses Verfahren hat aber den wesentlichen Nachteil, dass die Verformung im Prinzip durch Pressen und einen dadurch bewirkten Kaltfluss des relativ zum Material des Drahtseils weicheren Hülsenmaterials erfolgt und ein gleichzeitig mit der Verformung der Anpresshülse erfolgendes Zusammenpressen des Drahtseils daher nicht stattfindet, weil härteres Material wie das des Drahtseils nicht durch weicheres Material wie das der Anpresshülse zusammengepresst werden kann sondern das weichere Material in einem solchen Fall zunächst in Kaltfluss übergeht und dann nur in die äusseren Vertiefungen des Rundlitzenseils fliesst und die überschüssige Menge gewissermassen nach der Seite "wegfliesst", so dass sich ein relativ geringer tragender Querschnitt der Hülse zur Kraftübertragung in Hülsenlängsrichtung nach der Verformung, sowie eine beträchtliche oxide Länge der Hülse ergibt.

Die der Erfindung zugrundeliegende Aufgabe war nun, ein Verfahren und ein einstückiges Seilendstück zur Verwendung bei diesem Verfahren der jeweils gattungsgemäßen Art zu schaffen, womit auch höhere Belastbarkeiten der hergestellten Verbindung zwischen einem Rundlitzenseil und einem Seilendstück erreichbar sind.

Erfindungsgemäss wird das bei einem gattungsgemäßen Verfahren durch die Merkmale des Kennzeichens des Anspruchs 1 erreicht.

Ein besonderer Vorteil des beanspruchten Verfahrens ist, dass das Zusammenpressen des in die Anpresshülse eingesteckten Drahtseilendes durch Hämnern auf die das Drahtseilende umschliessende Anpresshülse erfolgt, denn mit Hämmern kann man auch härteres Material durch weicheres Material hindurch zusammenpressen, weil die Stossenergie eines Hammerschlages über das weichere Material auf das härtere Material übertragen wird, bevor das weichere Material gewissermassen nach der Seite "wegfliessen" kann.

Die Erfindung betrifft weiter ein einstückiges Seilendstück zur Verwendung bei dem Verfahren nach Anspruch 1, gemäß dem Oberbegriff des Anspruchs 2. Ein derartiges Seitenstück ist z.B. aus EP-A-0619443 bekannt. Hiervon unterscheidet sich des Seilendstück gemäß Anspruch 2 nach dadurch, dass das Seilendstück vor der Verformung seiner Anpresshülse folgende Merkmale aufweist:
a. der Bohrungsdurchmesser der Anpresshülse entspricht dem Durchmesser des Drahtseils,
b. der Bohrungsgrund der Anpresshülse läuft kegelig in Richtung des Zwischenstücks aus, wobei der Kegelwinkel α zwischen 80° und 110°, vorzugsweise bei 90°, liegt,
c. der Übergang vom Aussendurchmesser des Zwischenstücks auf den Aussendurchmesser der Anpresshülse ist durch eine Übergangsfläche gebildet, die etwa äquidistant zum Bohrungsgrund der Anpresshülse verläuft,
d. die Wandstärke im Übergangsbereich zwischen der Anpresshülse und dem Zwischenstück ist mindestens gleich der Wandstärke der Anpresshülse, maximal jedoch doppelt so dick.

Dabei können bei dem erfindungsgemässen Seilendstück die Übergangsstellen zwischen der genannten Übergangsfläche und dem Zwischenstück sowie der Anpresshülse zweckmässig abgerundet sein.

Das erfindungsgemässe Seilendstück hat den Vorteil, dass durch seine besondere Ausbildung relativ hohe Belastbarkeiten der Anpresshülse in ihrer Achsrichtung bei der hergestellten Verbindung Rundlitzenseil-Seilendstück erreichbar sind.

Anhand der nachstehenden Figuren ist die Erfindung im folgenden an einem Ausführungsbeispiel näher erläutert. Es zeigen
- Fig. 1: ein für die Herstellung vorbereitetes Drahtseilende und ein vorbereitetes Seilendstück in Schnittdarstellung,
- Fig. 2: eine Darstellung gemäß Fig. 1 mit in die Anpreßhülse des Seilendstücks eingestecktem Drahtseil, und
- Fig. 3: eine Ansicht der fertigen Seilendverbindung.

In den Figuren ist mit 1 ein Rundlitzen-Drahtseil (nachfolgend abkürzend "Drahtseil" genannt) und mit 2 ein Seilendstück bezeichnet. Beide Teile sind aus nicht-rostendem Werkstoff 1.4305 oder 1.4401 gefertigt.

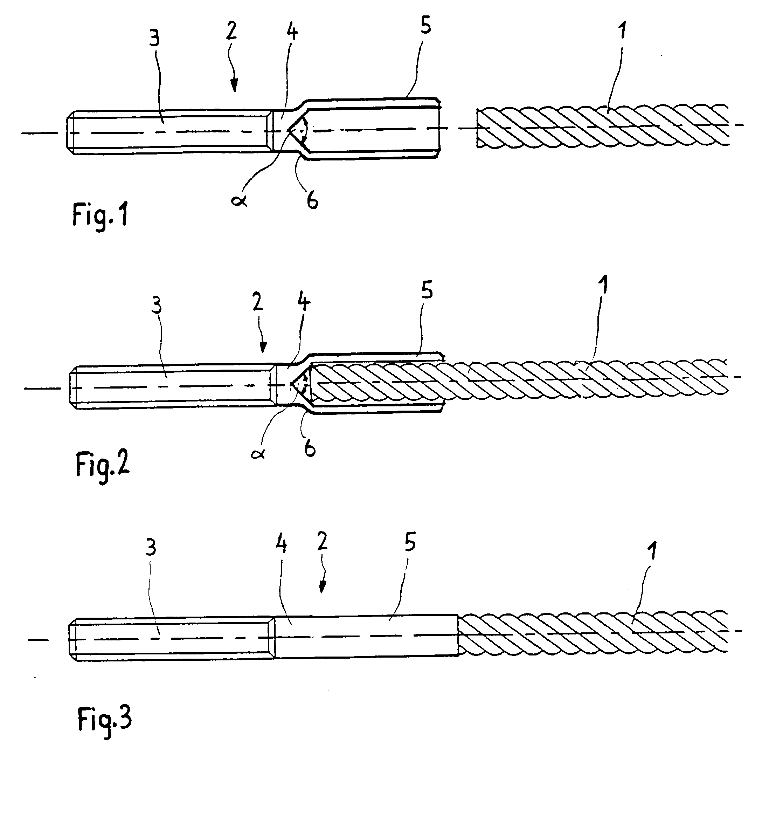

Das Seilendstück setzt sich einstückig aus einem Gewindebolzen 3, einem Zwischenstück 4 und einer Anpreßhülse 5 zusammen. Der Bohrungs-Durchmesser der Anpreßhülse 5 ist so auf den Durchmesser des Drahtseils 1 abgestimmt, daß dieses mit leichtem Spiel in die Anpreßhülse 5 einsteckbar ist. Aus den Fig. 1 und 2 ist auch zu erkennen, daß der Bohrungs-Durchmesser der Anpreßhülse 5 etwa dem Außendurchmesser des Gewindebolzens 3 und des Zwischenstücks 4 entspricht. Die Bohrungstiefe der Anpreßhülse 5 ist auf etwa den dreifachen Drahtseil-Durchmesser ausgelegt, wobei der Bohrungsgrund unter einem Kegelwinkel a von ca. 90° ausläuft.

Aufgrund der oben beschriebenen Durchmesser-Verhältnisse ergibt sich zwischen der Anpreßhülse 5 und dem Zwischenstück 4 ein Sprung im Außendurchmesser, der mittels einer Übergangsfläche 6 ausgeglichen wird. Diese Übergangsfläche 6 folgt in ihrer Neigung etwa der des Bohrungsgrundes der Anpreßhülse 5. Dabei entspricht die Wandstärke in diesem Übergangsbereich etwa der Wandstärke der Anpreßhülse 5. Die Übergangsfläche 6 geht jeweils mit leichtem Radius in die Mantelfäche der Anpreßhülse 5 bzw. in die Mantelfläche des Zwischenstücks 4 über. Diese Radien liegen je nach dem Drahtseil-Durchmesser zwischen 1 und 2 mm.

Zur Herstellung einer kraftschlüssigen Verbindung zwischen dem Drahtseil 1 und dem Seilendstück 2 wird wie folgt vorgegangen:

Das Drahtseil 1 wird auf die erforderliche Länge zugeschnitten. Dabei sind nur schnittfeste Seile zu verwenden, die nach dem Schneiden nicht aufspringen. Das jeweilige Seilende wird dann in die Anpreßhülse 5 des Seilendstücks 2 eingeschoben, bis es am Bohrungsgrund anliegt. Dabei ist unbedingt darauf zu achten, daß sich der Seilverband nicht öffnet.

Das Seilendstück 2 wird nun mit dem eingeschobenen Drahtseilende in die Preßmulde einer Exzenterpresse oder einer pneumatischen Presse eingelegt. Diese Einlegemulde weist eine Untertoleranz von ca. 5% auf. Diese Untertoleranz gibt die Gewähr, daß nach dem Hämmern und Verdichten das Seilendstück 2 in seinem Außendurchmesser nicht über ein vorgegebenes Nennmaß von +0,2 mm mißt. Das Seilendstück 2 ist genau fluchtend in die Preßmulde einzulegen. Dabei ist darauf zu achten, daß das Preßwerkzeug die gesamte Länge der Anpreßhülse 5 des Seilendstücks 2 überdeckt.

Während des Verdichtungsvorgangs durch Hämmern wird das Seilendstück 2 leicht von Hammerschlag zu Hammerschlag bis zumindest 100° in die linke und darauf in die rechte Richtung oder umgekehrt gedreht. Dadurch wird erreicht, daß die Anpreßhülse 5 des Seilendstücks 2 in ihrer gesamten Länge auf etwa den Drahtseil-Durchmesser verdichtet wird, das Seil zusammengepreßt wird und sich eine kraftschlüssige Verbindung ergibt. Die Oberfläche des Seilendstücks 2 ist durch das leichte Drehen während des Hämmerns sehr glatt und rund.

## Patentansprüche

1. Verfahren zur Herstellung einer Verbindung zwischen einem Rundlitzenseil (1) und und einem einstückigen Seilendstück (2), welches eine dünnwandige Anpresshülse (5) besitzt, wobei ein Ende des Drahtseils (1) zunächst in die Anpresshülse (5) eingesteckt und anschliessend durch radiale Verformung der Anpresshülse (5) eine kraftschlüssige Verbindung zwischen dem Drahtseil (1) und dem Seilendstück (2) hergestellt wird, derart dass der Aussendurchmesser der Anpresshülse (5) dem Durchmesser des Draftseils (1) entspricht, wobei die Anpresshülse (5) des Seilendstücks vor der Verbindungsherstellung einen mindestens annähernd dem Drahtseildurchmesser entsprechenden Innendurchmesser und einen grösseren Aussendurchmesser als der Drahtseildurchmesser aufweist, und wobei bei der Verbindungsherstellung der Durchmesser der Anpresshülse (5) mit dem eingesteckten Drahtseilende wenigstens annähernd bis auf den Drahtseildurchmesser reduziert wird, dadurch gekennzeichnet, dass dass die Reduktion des Durchmessers der Anpresshülse (5) mit dem eingesteckten Drahtseilende zur Gewährleistung einer etwa 60% der Seil-Mindestbruchlast betragenden Belastbarkeit der Anspresshülse (5) in ihrer Achsrichtung durch Hämmern erfolgt, wobei als Einstecktiefe des Drahtseils (1) in die Anpresshülse (5) etwa das Dreifache des Drahtseildurchmessers erreicht wird.

2. Seilendstück (2) aus nichtrostendem Stahl zur Verwendung bei dem Verfahren nach Einstückiges Anspruch 1, bestehend aus einem Gewindebolzen (3), einem Zwischenstücke (4) und einer dünnwandigen Anpresshülse (5), wobei der Aussendurchmesser des Gewindebolzens (3) und der des Zwischenstücks (4) dem Drahtseildurchmesser entsprechechen, wobei die Einstecktiefe des Drahtseils (1) in die Anpresshülse (5) etwa dem dreifachen Drahtseil-Durchmesser entspricht, dadurch gekennzeichnet, dass das Seilendstück (2) vor der Verformung seiner Anpresshülse (5) folgende Merkmale aufweist:
a. der Bohrungsdurchmesser der Anpresshülse (5) entspricht dem Durchmesser des Drahtseils (1),
b. der Bohrungsgrund der Anpresshülse (5) läuft kegelig in Richtung des Zwischenstücks (4) aus, wobei der Kegelwinkel α zwischen 80° und 110°, vorzugsweise bei 90°, liegt,
c. der Übergang vom Aussendurchmesser des Zwischenstücks (4) auf den Aussendurchmesser der Anpresshülse (5) ist durch eine Übergangsfläche (6) gebildet, die etwa äquidistant zum Bohrungsgrund der Anpresshülse (5) verläuft,
d. die Wandstärke im Übergangsbereich zwischen der Anpresshülse (5) und dem Zwischenstück (4) ist mindestens gleich der Wandstärke der Anpresshülse (5), maximal jedoch doppelt so dick.

3. Einstückiges Seilendstück nach Anspruch 2, dadurch gekennzeichnet, dass die Übergangsstellen zwischen der Übergangsfläche (6) und dem Zwischenstück (4) sowie der Anpresshülse (5) abgerundet sind.

## Claims

1. A process for forming a connection between a round-stranded cable (1) and a one-piece cable end-piece (2) having a thin-walled pressure sleeve (5), one end of the wire cable (1) first of all being inserted into the pressure sleeve (5), and then, as a result of radial deformation of the pressure sleeve (5), a force-fitting connection between the wire cable (1) and the cable end-piece (2) being formed in such a way that the external diameter of the pressure sleeve (5) corresponds to the diameter of the wire cable (1), the pressure sleeve (5) of the cable end-piece before the connection is formed having an internal diameter which corresponds at least approximately to the diameter of the wire cable, and an external diameter which is greater than the diameter of the wire cable, and the diameter of the pressure sleeve (5) having the inserted wire-cable end being reduced at least approximately to the diameter of the wire cable on forming the connection, characterized in that, in order to ensure that the load-bearing capacity of the pressure sleeve (5) in its axial direction is approximately 60% of the minimum breaking load of the cable, the diameter of the pressure sleeve (5) having the inserted wire-cable end is reduced by hammering, the insertion depth of the wire cable (1) in the pressure sleeve (5) reaching approximately triple the diameter of the wire cable.

2. A one-piece cable end-piece (2) of stainless steel for use in the process according to Claim 1, comprising a threaded bolt (3), an intermediate piece (4) and a thin-walled pressure sleeve (5), the external diameter of the threaded bolt (3) and that of the intermediate piece (4) corresponding to the diameter of the wire cable, the insertion depth of the wire cable (1) in the pressure sleeve (5) corresponding to approximately triple the diameter of the wire cable, characterized in that, before the deformation of its pressure sleeve (5), the cable end-piece (2) has the features below:
a. the diameter of the bore in the pressure sleeve (5) corresponds to the diameter of the wire cable (1),
b. the bottom of the bore in the pressure sleeve (5) tapers in the direction of the intermediate piece (4), the angle of taper a being between 80° and 110°, preferably 90°.
c. the transition from the external diameter of the intermediate piece (4) to the external diameter of the pressure sleeve (5) is formed by a transition face (6), which extends such that it is approximately equidistant from the bottom of the bore in the pressure sleeve (5).
d. the wall thickness in the transition region between the pressure sleeve (5) and the intermediate piece (4) is at least equal to the wall thickness of the pressure sleeve (5), although no greater than twice as thick.

3. A one-piece cable end-piece according to Claim 2, characterized in that the transition points between the transition face (6) and the intermediate piece (4) and the pressure sleeve (5) are rounded.

## Revendications

1. Procédé de fabrication d'une liaison entre un câble à torons ronds (1) et une pièce d'extrémité de câble en une pièce (2) qui possède un manchon d'application (5) à paroi mince, où une extrémité du câble métallique (1) est insérée d'abord dans le manchon d'application (5) et est établi ensuite par une déformation radiale du manchon d'application (5) une liaison par force entre le câble métallique (1) et la pièce d'extrémité de câble (2) de telle sorte que le diamètre extérieur du manchon d'application (5) correspond au diamètre du câble métallique (1), où le manchon d'application (5) de la pièce d'extrémité de câble, avant l'établissement de la liaison, présente un diamètre intérieur correspondant au moins approximativement au diamètre du câble métallique et un diamètre extérieur plus grand que le diamètre du câble métallique et où, lors de l'établissement de la liaison, le diamètre du manchon d'application (5) avec l'extrémité du câble métallique insérée est réduit au moins approximativement jusqu'au diamètre du câble métallique, caractérisé en ce que la réduction du diamètre du manchon d'application (5) avec l'extrémité de câble métallique insérée, pour assurer une capacité de charge, représentant environ 60 % de la charge de rupture minimale de câble, du manchon d'application (5) dans sa direction d'axe a lieu par martelage, où comme profondeur d'insertion du câble métallique (1) dans le manchon d'application (5), il est atteint environ le triple du diamètre du câble métallique.

2. Pièce d'extrémité de câble en une pièce (2) en acier non rouillant pour l'utilisation dans le procédé selon la revendication 1, constituée d'un boulon fileté (3), d'une pièce intermédiaire (4) et d'un manchon d'application (5) à paroi mince, où le diamètre extérieur du boulon fileté (3) et celui de la pièce intermédiaire (4) correspondent au diamètre du câble métallique, où la profondeur d'insertion du câble métallique (1) dans le manchon d'application (5) correspond à peu près au diamètre triple du câble métallique, caractérisée en ce que la pièce d'extrémité de câble (2), avant la déformation de son manchon d'application (5), présente les caractéristiques suivantes :
a. le diamètre de perçage du manchon d'application (5) correspond au diamètre du câble métallique (1),
b. le fond de perçage du manchon d'application (5) se termine d'une manière conique dans la direction de la pièce intermédiaire (4), où l'angle conique (α) se situe entre 80° et 110°, et qu'il est de préférence d'environ 90°,
c. la transition du diamètre extérieur de la pièce intermédiaire (4) au diamètre extérieur du manchon d'application (5) est constituée par une face de transition (6) qui s'étend à peu près d'une manière équidistante au fond de perçage du manchon d'application (5),
d. l'épaisseur de paroi dans la zone de transition entre le manchon d'application (5) et la pièce intermédiaire (4) est au moins égale à l'épaisseur de paroi du manchon d'application (5), mais au maximum son épaisseur représente le double.

3. Pièce d'extrémité de câble en une pièce selon la revendication 2, caractérisée en ce que les emplacements de transition entre la face de transition (6) et la pièce intermédiaire (4) ainsi que le manchon d'application (5) sont arrondis.
